Europäisches Patentamt

European Patent Office

Office européen des brevets

(11) Veröffentlichungsnummer: **0 081 166**
**A1**

(12) **EUROPÄISCHE PATENTANMELDUNG**

(21) Anmeldenummer: **82110964.2**

(22) Anmeldetag: **27.11.82**

(51) Int. Cl.³: **B 05 C 15/00**
**B 05 B 15/04**

(30) Priorität: **03.12.81 DE 3147808**

(43) Veröffentlichungstag der Anmeldung:
**15.06.83 Patentblatt 83/24**

(84) Benannte Vertragsstaaten:
**CH DE FR GB IT LI SE**

(71) Anmelder: **Fritz Schäfer Gesellschaft mit beschränkter Haftung**
**Fritz-Schäfer-Strasse 20**
**D-5908 Neunkirchen(DE)**

(72) Erfinder: **Schäfer, Gerhard**
**Oberes Gerstenfeld 2**
**D-5908 Neunkirchen(DE)**

(74) Vertreter: **Müller, Gerd et al,**
**Patentanwälte F.W. Hemmerich Gerd Müller, Dipl.-Ing.**
**D. Grosse Felix Pollmeier Hammerstrasse 2**
**D-5900 Siegen 1(DE)**

(54) Vorrichtung zur Spritzbehandlung, insbesondere zur Spritzlackierung von Gegenständen.

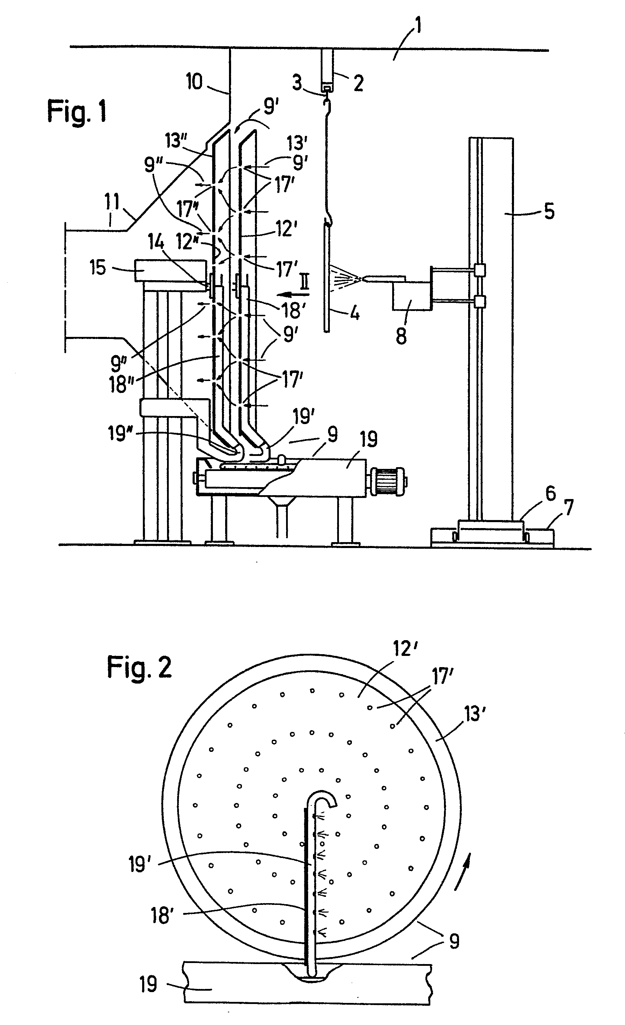

(57) Eine Vorrichtung zur Spritzbehandlung, insbesondere zur Spritzlackierung von Gegenständen 4 hat eine sich quer zur Spritzrichtung erstreckende Niederschlagsfläche 12', 12" für das an den Gegenständen 4 als sogenanntes Overspray vorbeitretende Spritzmedium. Der Spritzkammer 1 wird ein im wesentlichen mit der Spritzrichtung gleichgerichteter Luftstrom 9', 9" aufrechterhalten, der gegen die Niederschlagsflächen 12', 12" gerichtet ist. Ein Abstreifer 18', 18" entfernt den Overspray-Niederschlag von der Niederschlagsfläche 12', 12" und bringt ihn in eine Auffangwanne 19. Zur Verbesserung der Wirkungsweise sind wenigstens zwei jewells mit einem Abstreifer 18' bzw. 18" zusammenarbeitende Niederschlagsflächen 12', 12" im Abstand hintereinander angeordnet. Dabei ist wenigstens die vordere Niederschlagsfläche 12' mit Luftdurchlässen 17' versehen (Fig. 1).

Fig. 1

EP 0 081 166 A1

PATENTANWÄLTE  F.W. HEMMERICH · GERD MÜLLER · D. GROSSE · F. POLLMEIER

**0081166**

27. Oktober 1982          f.ni                    73 852

Fritz Schäfer Gesellschaft mit beschränkter Haftung,
Fritz-Schäfer-Straße 20, 5908 Neunkirchen

**Vorrichtung zur Spritzbehandlung, insbesondere zur
Spritzlackierung von Gegenständen**

Gegenstand der Erfindung ist eine Vorrichtung zur Spritzbehandlung, insbesondere zur Spritzlackierung von Gegenständen mit einer sich quer zur Spritzrichtung erstreckenden Niederschlagsfläche für das an den Gegenständen vorbeitretende Spritzmedium - das sogenannte Overspray - mit mindestens einem Abstreifer zum Entfernen des Niederschlages
von der Niederschlagsfläche und einer unterhalb der Niederschlagsfläche angeordneten Auffangwanne, wobei in der Spritzkammer ein im wesentlichen mit der Spritzrichtung gleichgerichteter Luftstrom aufrechterhalten ist.

Vorrichtungen der gattungsgemäßen Art sind - hauptsächlich
als sogenannte Naßlack-Rückgewinnungsanlagen - bereits bekannt
durch die DE-OS 28 23 958 und das DE-GM 81 15 387.

Dabei haben diese bekannten Vorrichtungen gattungsgemäßer
Art den beträchtlichen Vorteil, daß das Entfernen des Overspray-Niederschlages von der Niederschlagsfläche vielfach ohne
Lösungsmittelzugabe durchgeführt werden kann, während in den
Fällen einer Lösungsmittelzugabe jeweils nur relativ geringe
Lösungsmittelmengen benötigt werden, um dem Overspray eine
Konsistenz bzw. Viskosität zu geben, die die unmittelbare
Wiederverwendung als Spritzmedium ermöglicht.

Eine Unzulänglichkeit dieser gattungsgemäßen Vorrichtungen
zur Spritzbehandlung liegt jedoch darin, daß der in der Spritzkammer erzeugte, im wesentlichen mit der Spritzrichtung des Spritzmediums gleichgerichtete Luftstrom an den Niederschlagsflächen stark abgelenkt wird, bevor er in den Luftauslaß gelangt. Dieser Luftstrom wird dabei hauptsächlich als Saugluftstrom erzeugt. Dabei ergibt sich der Nachteil, daß ein großer Teil der ungenutzt an den zu behandelnden Gegenständen vorbeifliegenden Partikel des Spritzmediums nicht auf die Niederschlagsfläche gelangt, sondern durch den an dieser abgelenkten Saugluftstrom mitgerissen wird, und sich erst später in höchst unerwünschter Art und Weise, bspw. im Saugkanal oder sogar am Suagzugventilator selbst niederschlägt.

Es ist zwar auch durch die DE-OS 29 30 080 bzw. den Prospekt "Naßlack-Rückgewinnung funktioniert" der Anmelderin eine Vorrichtung zur Spritzbehandlung, insbesondere zur Spritzlackierung, von Gegenständen mit einer sich quer zur Spritzrichtung erstrekkenden Niederschlagsfläche für das an den Gegenständen vorbeitretende Spritzmedium bekannt, bei der als Niederschlagsfläche ein kontinuierlich bewegtes Endlosband Verwendung findet, welches als Wabenband, Gliederband oder Rollenband ausgeführt ist, und auf diese Art und Weise einen ungehinderten Durchtritt des Luftstromes zur Absaugstelle ermöglicht.

Abgesehen davon, daß auch in diesem Falle noch ein gewisser Anteil von Partikeln des Spritzmediums in unerwünschter Weise zur Absaugstelle des Luftstromes gelangen kann, findet hierbei die Entfernung des Overspray-Niederschlages von der Niederschlagsfläche mittels eines vom Endlosband durchlaufenen Waschsystems statt. Eine sichere Funktion eines solchen Waschsystems ist dabei jedoch nur durch Verwendung großer Lösungsmittelmengen gewährleistet, die das Overspray naturgemäß so stark verdünnen, daß eine unmittelbare Wiederverwendung als Spritzmedium nicht möglich ist. Vielmehr muß noch ein besonderes Nachbehandlungssystem zum Einsatz gebracht werden, in welchem dem rückgewonnenen Overspray die überschüssige Lösungsmittelmenge soweit entzogen werden kann, daß es die zur Verwendung als Spritzmedium geeignete Konsistenz bzw. Viskosität erhält.

Die Effektivität einer solchen Vorrichtung zur Spritzbehandlung wird besonders dann beeinträchtigt, wenn zum Betrieb des Waschsystems Lösungsmittel benutzt werden müssen, die überwiegend aus flüchtigen Bestandteilen bestehen. Relativ große Mengen des Lösungsmittels können hierbei nämlich durch die unvermeidbare Verflüchtigung verlorengehen.

Um das Vagabundieren von Overspray-Partikeln und das Niederschlagen derselben an unerwünschten Stellen der Behandlungsanlage oder der zu behandelnden Gegenstände zu vermeiden, ist auch schon vorgeschlagen worden, als Niederschlagsfläche für das Overspray eine Silberwand zu benutzen, die luftdurchlässig ist, jedoch die Overspray-Partikel festhält (siehe DE-OS 28 37 763). Es liegt jedoch auf der Hand, daß eine solche Filterwand nur für kurze Zeit wirksam ist, weil ihre Luftdurchlässigkeit mit zunehmender Niederschlagsbildung sehr schnell abnimmt und daher die Filterwand ausgetauscht werden muß.

Außer den sich aus dieser Wirkungsweise der bekannten Vorrichtung ergebenden, betriebstechnischen Unzulänglichkeiten, liegt der weitere Nachteil vor, daß das in der Filterwand zurückgehaltene Overspray für eine Wiederverwendung verlorengeht und zur Vermeidung von Umweltschäden zusammen mit der Filterwand später in geeigneter Weise vernichtet werden muß.

Zur Vermeidung dieser Nachteile schlägt daher die DE-OS 28 37 763 vor, den Luftstrom im wesentlichen vertikal von oben nach unten zu richten und an der senkrechten Niederschlagswand vorbeistreichen zu lassen. Unten wird dann der Luftstrom über einem Flüssigkeitsbad abgelenkt, in welchem sich die Overspray-Partikel infolge der Schwerkraft niederschlagen sollen. Das Flüssigkeitsbad wird dabei im Umlaufverfahren betrieben, d. h., eine hieraus abgesaugte Flüssigkeitsmenge wird oben der Auffangwand zugeführt, so daß sie an dieser entlangläuft und unter Mitnahme von an der Auffangwand niedergeschlagenen Overspray-Partikeln nach unten in das Flüssigkeitsbad zurückläuft.

Auch diese bekannte Vorrichtung hat den Nachteil, daß sie zu ihrem Betrieb beträchtliche Flüssigkeitsmengen benötigt. Wenn dabei als Abscheideflüssigkeit Wasser verwendet wird, geht in der Regel das niedergeschlagene Overspray ungenutzt verloren und muß zur Vermeidung von Umweltschäden auch aus dem Wasser ausgeschieden werden. Wird hingegen als Niederschlagsflüssigkeit für das Overspray ein auch dem Spritzmedium selbst enthaltenes Lösungsmittel benutzt, dann ergeben sich im Betrieb der durch die DE-OS 28 37 763 bekanntgewordenen Vorrichtung die gleichen Nachteile wie bei der Vorrichtung nach der DE-OS 29 30 080.

Zweck der Erfindung ist es, die den vorgenannten, bekannten Vorrichtungen zur Spritzbehandlung von Gegenständen anhaftenden Nachteile zu vermeiden, ihre Vorteile jedoch zu vereinigen. Deshalb ist der Erfindung das Ziel gesetzt, eine Vorrichtung zur Spritzbehandlung, insbesondere zur Spritzlackierung, von Gegenständen der eingangs beschriebenen Gattung zu schaffen, die eine optimale Entfernung des Oversprays aus dem sich durch die Spritzkammer bewegenden Luftstrom ermöglicht sowie mit geringem Aufwand eine Rückgewinnung desselben zur Wiederverwendung als Spritzmedium gewährleistet. Dabei soll das rückgewonnene Overspray ohne aufwendige und kostspielige Nachbehandlung eine Konsistenz bzw. Viskosität erhalten, die eine unmittelbare Wiederverwendung als Spritzmedium ermöglicht.

Die Lösung dieser Aufgabe wird nach dem Kennzeichnungsteil des Anspruchs 1 dadurch erreicht, daß wenigstens zwei jeweils mit einem Abstreifer zusammenarbeitende Niederschlagsflächen im Abstand hintereinander angeordnet sind und dabei wenigstens

0081166

PATENTANWÄLTE  F.W. HEMMERICH · GERD MÜLLER · D. GROSSE · F. POLLMEIER

die vordere Niederschlagsfläche - in an sich bekannter Weise - luftdurchlässig ausgebildet ist. Wichtig ist dabei, daß die luftdurchlässige Niederschlagsfläche eine solche Formstabilität hat, daß sie einwandfrei mit dem ihr zugeordneten Abstreifer zusammenwirken kann.

Gemäß Anspruch 2 ist es nach der Erfindung möglich, zwei baugleiche Niederschalgsflächen im Abstand hintereinander vorzusehen. Nach Anspruch 3 kann es sich aber auch als zweckmäßig erweisen, wenn erfindungsgemäß zwei baulich unterschiedliche Niederschlagsflächen vorgesehen werden.

Im Falle einer baugleichen Ausführung ist nach der Erfindung gemäß Anspruch 4 vorgesehen, daß die Niederschlagsflächen aus um horizontale Achsen drehantreibbaren Scheiben bestehen. Erfindungsgemäß können dabei nach Anspruch 5 diese Scheiben achsgleich angeordnet sein sowie nach Anspruch 6 auf einer gemeinsamen Welle sitzen, damit sie gleichzeitig und gleichläufig antreibbar sind. Entsprechend dem Anspruch 7 ist es aber gemäß der Erfindung auch möglich, die Scheiben gegenläufig antreibbar vorzusehen. In diesem Falle lassen sie sich sowohl in Achsfluchtlage als auch achsparallel im Abstand voneinander auf zwei verschiedenen Antriebswellen anordnen.

Eine andere erfindungsgemäße Weiterbildung der Vorrichtung nach den Ansprüchen 1 und 2 ist gemäß Anspruch 8 dadurch möglich, daß die beiden Niederschlagsflächen aus ortsfesten Wänden bestehen, an denen die Abstreifer in Vertikal- oder Horizontalrichtung entlangbewegbar sind.

Eine andere erfindungsgemäße Bauart der Vorrichtung nach den Ansprüchen 1 und 2 läßt sich hingegen nach Anspruch 9 dadurch schaffen, daß die beiden Niederschlagsflächen von der Außenseite und der Innenseite eines über Umlenkrollen geführten endlosen Bandes gebildet sind, wobei sowohl der Außenseite als auch der Innenseite desselben ein stationärer Abstreifer zugeordnet ist.

P 31 47 808.5          16.7.1982

Zur Weiterbildung einer erfindungsgemäßen Vorrichtung nach
den Ansprüchen 1 und 3 ist gemäß Anspruch 10 vorgesehen, daß
die eine Niederschlagsfläche als drehbare Scheibe und die
andere Niederschlagsfläche als stationäre Wand ausgeführt
ist. Gemäß Anspruch 11 ist es jedoch auch möglich, die eine
Niederschlagsfläche als stationäre Wand auszubilden, während
die andere Niederschlagsfläche aus einem über Umlenkrollen
geführten endlosen Band besteht.

In allen Fällen erweist es sich für einen langfristig störungsfreien Betrieb der Vorrichtung als wichtig, wenn gemäß Anspruch
12 die Luftdurchlässe in den Niederschlagsflächen aus Durchbrüchen, z.B. Löchern oder Schlitzen, relativ großer Abmessung
bestehen. Solche Durchbrüche lassen sich nämlich während einer
Betriebspause der Vorrichtung leicht und sicher reinigen.

In der Zeichnung ist der Gegenstand der Erfindung in verschiedenen Ausführungsbeispielen dargestellt. Hierbei zeigt

Figur 1    einen vertikalen Querschnitt durch eine Spritzkammer
           mit einer darin aufgestellten Vorrichtung zur Spritzbehandlung von Gegenständen und zur Rückgewinnung
           von Overspray in einer ersten Ausführungsform,

Figur 2    eine Stirnansicht auf die Vorrichtung zur Rückgewinnung von Overspray in Pfeilrichtung II der Fig. 1
           gesehen,

Figur 3    einen vertikalen Querschnitt durch eine Spritzkammer
           mit einer darin aufgebauten Vorrichtung zur Spritz-
           behandlung von Gegenständen und zur Rückgewinnung
           von Overspray in einer anderen Bauart,

Figur 4    eine Ansicht in Pfeilrichtung IV der Fig. 3 auf die
           Vorrichtung zur Rückgewinnung von Overspray,

Figur 5    einen vertikalen Querschnitt durch eine Spritzkammer mit einer weiteren Vorrichtung zur Rückgewinnung
           von Overspray,

0081166

Figur 6    eine Ansicht in Pfeilrichtung VI auf die Vorrichtung zur Rückgewinnung von Overspray nach
           Fig. 5,

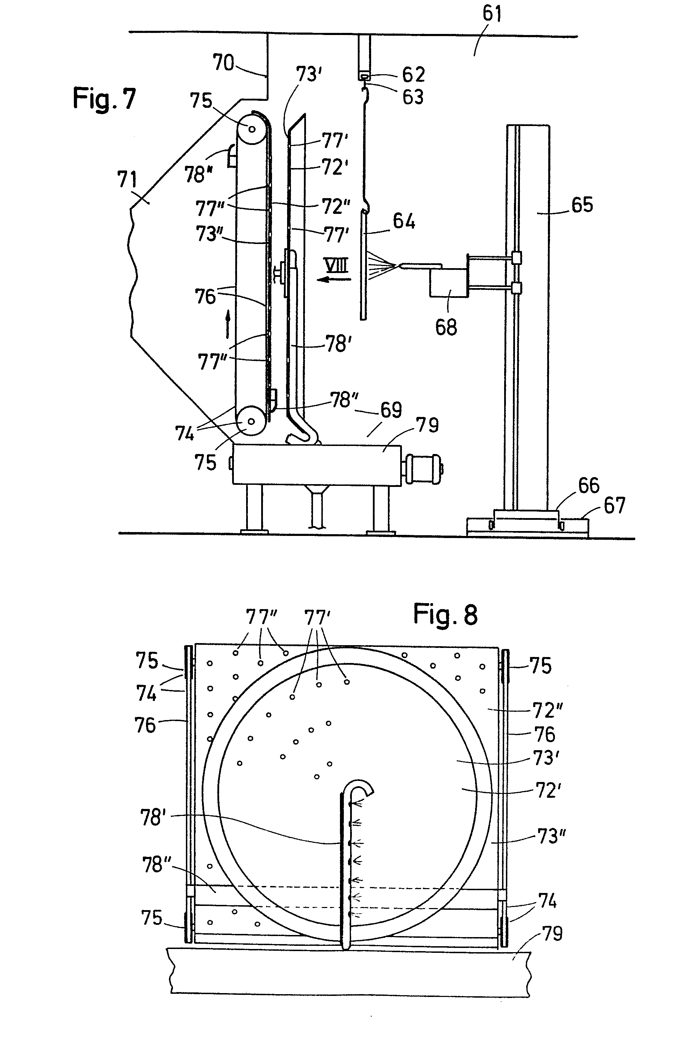

Figur 7    im Querschnitt eine Spritzkammer mit darin aufgestellter Vorrichtung zur Spritzbehandlung von Gegenständen
           zur Rückgewinnung von Overspray in einer wieder anderen Bauart, und

Figur 8    eine Ansicht in Pfeilrichtung VIII der Fig. 7 auf
           die Vorrichtung zur Rückgewinnung von Overspray.

In Fig. 1 ist eine Farbspritzkammer 1 angedeutet, in der an
der Decke eine Laufschiene 2 montiert ist. In dieser Laufschiene 2 sind die Transportglieder 3 eines Kettenförderers geführt,
welche mit bestimmten Abständen voneinander in Längsrichtung
durch die Kammer 1 fahrbar sind. An jedem Transportglied 3
kann dabei ein Gegenstand 4 aufgehängt werden, welcher während
seiner Transportbewegung durch die Kammer 1 mit einem Farbüberzug versehen werden soll.

An einer Säule 5, die mittels eines Laufwagens 6 auf einer
Führungsbahn 7 in begrenztem Maße horizontal hin- und herfahrbar ist, ist ein Spritzaggregat 8 angeordnet, welches abwechselnd in Auf- und Abwärtsrichtung bewegt werden kann. Während der Transportbewegung der Gegenstände 4 durch die Kammer 1
können diese also durch das Spritzaggregat 8 mit einer gleichmäßigen Farbschicht versehen werden.

Da der Spritzstrahl des Spritzaggregates 8 in der Regel eine
divergierende Gestalt hat, d.h., einen sich vom Austrittsende
der Spritzdüse kegelförmig erweiternden Bereich bestreicht,
wird ein gewisser Anteil der aus dem Spritzaggregat 8 ausgebrachten Farbe ungenutzt an den einzelnen Gegenständen 4
vorbeigespritzt. Damit diese nicht auf den Gegenstand 4 aufgebrachte Farbe, das sogenannte Overspray, nicht ungenutzt verlorengeht, sondern wieder verwendet werden kann, ist in der Farbspritzkammer 1 eine besondere Vorrichtung 9 zur Rückgewinnung des Oversprays vorgesehen. Diese Vorrichtung 9 zur Rückgewinnung des Oversprays ist dabei in der Farbspritzkammer 1
dem Spritzaggregat mit Abstand gegenüberliegend vorgesehen,
so daß die zu behandelnden Gegenstände 4 zwischen dieser Vorrichtung 9 und dem Spritzaggregat 8 hindurchbewegt werden können, wie das aus Fig. 1 ersichtlich ist.

Zur Erzielung einer optimalen Wirkungsweise der Vorrichtung 9
zur Rückgewinnung des Oversprays wird in der Farbspritzkammer
1 ein mit der Spritzrichtung des Spritzaggregates 8 gleichgerichteter Luftstrom erzeugt, welcher in Fig. 1 durch die Zeile
9' und 9" gekennzeichnet ist. Zur Erzeugung des im wesentlichen
quer durch die Spritzkammer 1 gehenden, horizontalen Luftstroms
schließt sich an deren dem Spritzaggregat 8 gegenüberliegende
Wand 10 ein Saugkanal 11 an, der bspw. mit einem Saugzugventilator in Verbindung steht.

Beim Ausführungsbeispiel nach den Fig. 1 und 2 weist die Vorrichtung 9 zur Rückgewinnung des Oversprays Niederschlagsflächen
12' und 12" für dieses Overspray auf.

Die Niederschlagsflächen 12' und 12" sind dabei im Abstand hintereinander vor dem Saugkanal 11 angeordnet und werden von den
der Spritzkammer 1 zugewendeten Stirnflächen zweier kreisförmiger Scheiben 13' und 13" gebildet, die auf einer horizontal
ausgerichteten Welle 14 befestigt sind, welche drehbar in Lagern 15 gehalten wird, die auf einem ortsfesten Gestell 16
sitzen.

Über die Welle 14 werden die beiden Scheiben 13' und 13", bspw.
durch einen Elektromotor, in verhältnismäßig langsame Drehung
versetzt, so daß die als Overspray an den Gegenständen 4 jeweils vorbeitretende Farbe im wesentlichen auf die Niederschlagsfläche 12' der vorderen Scheibe 13' auftrifft und dort
einen flächigen Niederschlag bildet.

PATENTANWÄLTE  F.W. HEMMERICH · GERD MÜLLER · D. GROSSE · F. POLLMEIER  –

Damit der in der Farbspritzkammer 1 erzeugte, quergerichtete
Luftstrom die Bildung des Overspray-Niederschlags auf der
Niederschlagsfläche 12' der drehangetriebenen Scheibe 13'
begünstigt, ist letztere mit einer Vielzahl von relativ
großen Durchbrüchen 17', bspw. Löchern oder Schlitzen versehen, welche als Durchlässe für den durch die Pfeile 9'
angedeuteten Luftstrom dienen.

Damit die vom Luftstrom 9' durch die Durchbrüche 17' der
Scheibe 13' mitgerissenen Overspray-Partikel nicht verlorengehen bzw. nicht in unerwünschter Weise in den Saugkanal 11
gelangen, ist die die zweite Niederschlagsfläche 12" aufweisende drehbare Scheibe 13" mit Abstand hinter der Scheibe 13'
angeordnet. Auch in dieser Scheibe 13" sind dabei Durchbrüche
17" vorhanden, damit der durch die Pfeile 9" angedeutete Luftstrom in den Saugkanal 11 gelangen kann. Auch diese verhältnismäßig groß bemessenen Durchbrüche 17" können dabei aus
Löchern oder Schlitzen bestehen, die jedoch gegenüber den
Durchbrüchen 17' in der Scheibe 13' eine Versetztlage haben,
so daß die beiden Gruppen von Durchbrüchen 17' und 17" auf
unterschiedlichen Drehkreisen liegen. Die durch die Durchbrüche
17' in der vorderen Scheibe 13' vom Luftstrom 9' hindurchgerissenen Overspray-Partikel werden daher auf der Niederschlagsfläche 12" der zweiten Scheibe 13" festgehalten, bevor der
Luftstrom 9" in den Saugkanal 11 gelangt. Zur Entfernung des
Overspray-Niederschlages von den Niederschlagsflächen 12' und
12" der beiden drehangetriebenen Scheiben 13' und 13" dienen
dabei jeweils ortsfeste Abstreifer 18' und 18", die, wie besonders deutlich aus Fig. 2 hervorgeht, in Vertikalrichtung
verlaufend, die untere Hälfte der Scheiben 13' und 13" bestreichen.

Von den Abstreifern 18' und 18" wird das Overspray in eine
unterhalb der kreisförmigen Scheiben 13' und 13" angeordnete
Auffangwanne 19 gefördert, aus welcher es abgeleitet und zwecks
Wiederverwendung dem Spritzaggregat 8 zugeführt werden kann.

**0081166**

Damit der Overspray-Niederschlag durch die Abstreifer 18'
und 18" von der Niederschlagsflächen 12' und 12" der kreisförmigen Scheiben 13' und 13" in optimaler Weise entfernt
und gleichzeitig der eingetretene Lösungsmittelverlust im
Overspray ausgeglichen werden kann, können die Niederschlagsflächen 12' und 12" der beiden drehangetriebenen Scheiben 13'
und 13" entweder kontinuierlich oder aber intermittierend
mit dem betreffenden Lösungsmittel benetzt werden. Zu diesem
Zweck sind dann im Bereich der Abstreifer 18' und 18" jeweils
Zuführrohre 19' und 19" für das Lösungsmittel vorgesehen,
welche mit einer Vielzahl von in Laufrichtung der Scheiben
13' und 13" orientierten Sprühdüsen und/oder an ihrem oberen
Ende mit einem Überlauf ausgestattet sind, wie das aus Fig. 2
erkennbar ist.

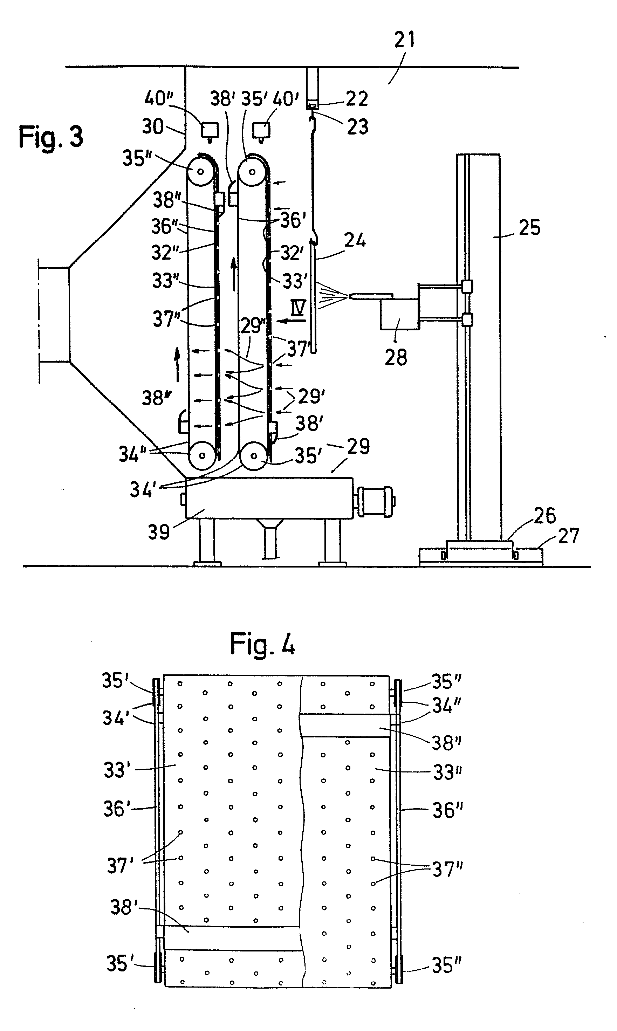

In den Fig. 3 und 4 der Zeichnung ist wiederum unter der
Decke einer Spritzkammer 21 eine Laufschiene 22 montiert,
in der die Transportglieder 23 eines Kettenförderers in bestimmten Abständen voneinander durch die Spritzkammer 21 fahren und dabei die während ihrer Transportbewegung mit einem
Farbüberzug zu versehenden Gegenstände 24 tragen. Eine vertikale Säule 25 ist mittels eines Laufwagens 26 in einer ortsfesten Führung 27 über eine bestimmte Wegstrecke hin- und
herfahrbar vorgesehen. An dieser Säule ist in Auf- und Abwärtsrichtung bewegbar das Spritzaggregat 28 gehalten, dessen Spritzdüsen in Horizontalrichtung auf die zu behandelnden Gegenstände
24 gerichtet ist.

In der Spritzkammer 21 ist an der den zu behandelnden Gegenständen 24 gegenüberliegenden Seite dem Spritzaggregat 28
eine Vorrichtung 29 zur Rückgewinnung des Oversprays vorgesehen.

Auch in diesem Falle wird in der Spritzkammer 21 ein mit der
Arbeitsrichtung des Spritzaggregates 8 gleichgerichteter, also
im wesentlichen horizontaler Luftstrom erzeugt, der durch die Pfeile 29' und 29" angedeutet ist. Der Luftstrom wird dabei mit Hilfe eines an die Wand 30 anschließenden Saugkanals 31 erzeugt, der mit einem Saugzugventilator verbunden ist.

Vor dem Saugkanal 31 bzw. der Wand 30 sind zwei im Abstand hintereinanderliegende Niederschlagsflächen 32' und 32" für das an den zu behandelnden Gegenständen 24 vorbeigehende Overspray vorgesehen. Diese Niederschlagsflächen 32' und 32" werden dabei von zwei ortsfesten, im wesentlichen vertikal orientierten Wänden 33' und 33" gebildet.

Jeder der ortsfesten Wände 33' und 33" ist dabei eine Antriebsvorrichtung 34' bzw. 34" zugeordnet, die bspw. aus um Umlenkrollen-Paaren 35' bzw. 35" geführten Endlosketten 36' bzw. 36" bestehen.

Jede der ortsfesten Wände 33' und 33" ist dabei gleichmäßig über ihre Fläche verteilt mit im Querschnitt relativ großen Durchbrüchen 37' bzw. 37", bspw. in Form von Löchern oder Schlitzen versehen. Dabei sind die Durchbrüche 37' in der Wand 33' relativ zu den Durchbrüchen 37" in der Wand 33" versetzt angeordnet, so daß der durch die Pfeile 29' und 29" gekennzeichnete Luftstrom nicht geradlinig durch die beiden Wände 33' und 33" hindurchgeht, sondern, wie die Pfeile 29" andeuten, zwischen diesen eine gewisse Ablenkung erfährt.

Das an den der Oberflächenbehandlung unterworfenen Gegenständen 24 als Overspray vorbeifliegende Spritzmedium trifft, unterstützt durch den Luftstrom 29' auf die Niederschlagsfläche 32' der stationären Wand 33' und schlägt sich auf dieser zum größten Teil nieder. Nur die sich jeweils im Bereich der Durchbrüche 37' bewegenden Overspray-Partikel werden vom Luftstrom 29' durch die Durchbrüche 37' mitgerissen und treffen dann anschließend auf die Niederschlagsfläche 32 der dahinterliegenden stationären Wand 33", wo sie sich absetzen, während der Luftstrom entsprechend den Pfeilen 29" durch deren Durchbrüche
37" in den Saugkanal 31 gelangt.

Das auf den Niederschlagsflächen 32' bzw. 32" befindliche
Overspray wird mit Hilfe von durch die Antriebsvorrichtungen
34' bzw. 34" bewegten Abstreifern 38' bzw. 38", die sich von
oben nach unten bewegen, von den ortsfesten Wänden 33' bzw.
33" entfernt, wobei es in die unterhalb der stationären Wände
33' und 33" befindliche Auffangwanne 39 gelangt.

Von dieser Auffangwanne 39 aus kann dann das rückgewonnene
Overspray abgeleitet und gegebenenfalls dem Spritzaggregat
28 zur Wiederverwendung zugeführt werden.

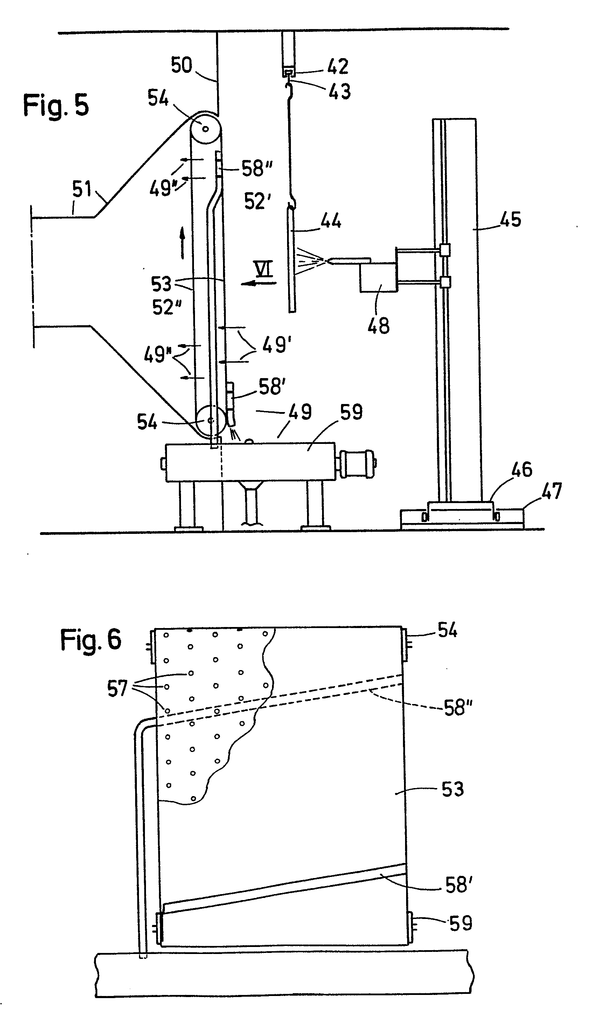

Wenn es erwünscht ist, die Wirkungsweise der Abstreifer 38'
bzw. 38" zu unterstützen und/oder den Lösungsmittel-Verlust
aus dem aus den Niederschlagsflächen 32' bzw. 32" befindlichen
Overspray auszugleichen, können oberhalb der ortsfesten Wände
33' bzw. 33" besondere Lösungsmittel-Dosiervorrichtungen 40'
und 40" vorgesehen werden. Diese benetzen dann kontinuierlich
oder intermittierend die Niederschlagsflächen 32' bzw. 32"
der stationären Wände 33' bzw. 33" mit dem Lösungsmittel, wobei dieses dann nach abwärts den Niederschlagsflächen 32'
bzw. 32" entlangläuft und zusammen mit dem Overspray durch
die Abstreifer 38' bzw. 38" hiervon entfernt und in die Auffangwanne 39 gefördert wird. In den Fig. 5 und 6 ist eine
Spritzkammer 41 gezeigt, in der an der Decke wiederum die Laufschiene 42 für die Transportglieder 43 eines Kettenförderers
angeordnet ist. An den Transportgliedern 43 sind dabei die
zu lackierenden Gegenstände 44 aufgehängt. Eine vertikale
Säule 45 kann mittels eines Laufwagens 46 in begrenztem Maße
horizontal und parallel zur Transportrichtung der Gegenstände
44 in der Spritzkammer 41 hin- und hergefahren werden. An der
Säule 45 ist dabei in Auf- und Abwärtsrichtung bewegbar das
Spritzaggregat 48 vorgesehen.

PATENTANWÄLTE F.W. HEMMERICH · GERD MÜLLER · D. GROSSE · F. POLLMEIER

Der dem Spritzaggregat 48 gegenüberliegenden Seite der zu
lackierenden Gegenstände 44 ist eine Vorrichtung 49 zur
Rückgewinnung des Oversprays zugeordnet. Hinter einer Wand
50 der Spritzkammer 41 schließt sich dabei an diese Vorrichtung 49 ein Saugkanal 51 an, der mit einem Saugzugventilator
in Verbindung steht, mit dessen Hilfe in der Spritzkammer 41
ein im wesentlichen in Arbeitsrichtung des Spritzaggregates
48 gerichteter Luftstrom erzeugt werden kann, der bspw. durch
die Pfeile 49' und 49" angeduetet ist. Parallel zur vertikalen
Wand 50 der Spritzkammer 41 erstrecken sich zwei Niederschlagsflächen 52 und 52", die im Abstand hintereinander liegen. Die
Niederschlagsfläche 52' wird dabei von der Außenseite und die
Niederschlagsfläche 52" von der Innenseite eines endlosen Bandes 53 gebildet, das um Umlenkrollen 45 herumläuft und sich
fortwährend in langsamer Bewegung befindet.

Das endlose Transportband 53 ist dabei gleichmäßig über seine
gesamte Fläche verteilt mit im Querschnitt verhältnismäßig
großen Durchbrüchen 57, bspw. in Form von Löchern oder Schlitzen versehen. Es kann aber auch aus einer Vielzahl einzelner
Glieder, bspw. in Form von Stäben oder Waben zusammengesetzt
sein, welche zwischen sich die Durchbrüche 57 bilden.

Das bei der Spritzbehandlung der Gegenstände 44 an diesem als
Overspray vorbeitretende Spritzmedium wird, unterstützt durch
den Luftstrom 49' gegen die Niederschlagsfläche 52 des endlosen Bandes 53 gefördert und an dieser festgehalten. Nur die
sich jeweils im Bereich der Durchbrüche 57 befindenden Overspray-Partikel werden vom Luftstrom 49' mitgerissen, treffen
dann andererseits auf die im Abstand hinter der Niederschlagsfläche 52 von der Innenseite des endlosen Bandes 53 gebildete
zweite Niederschlagsfläche 52', wo sie sich absetzen, bevor
der Luftstrom 49" in den Saugkanal 51 gelangt.

Der von der Außenseite des endlosen Bandes 53 gebildeten Niederschlagsfläche 52' ist unten ein stationärer Abstreifer 58' zugeordnet, während mit der von der Innenseite dieses Bandes gebildeten Niederschlagsfläche 52" oben ein stationärer
Abstreifer 58" zugeordnet ist.

Von den sich bewegenden Niederschlagsflächen 52' und 52"
wird dabei der darauf gebildete Overspray-Niederschlag mit
Hilfe der Abstreifer 58' und 58" entfernt und in die Auffangwanne 59 geleitet. Von hier aus kann das zurückgewonnene
Overspray abgeleitet und gegebenenfalls dem Spritzaggregat
48 unmittelbar zur Wiederverwendung zugeführt werden.

Auch in diesem Falle ist es möglich, die Niederschlagsflächen
52' und 52", bspw. mittels Sprühdüsen, mit Lösungsmittel zu
benetzen, damit das Entfernen des Oversprays erleichtert und
der in diesem entstandene Lösungsmittelverlust ausgeglichen
wird.

Nach den Fig. 7 und 8 ist in einer Spritzkammer 61 wiederum
deckenseitig die Laufschiene 62 für Transportglieder 63 eines
Kettenförderers angeordnet, mit dessen Hilfe die zu behandelnden Gegenstände 64 durch die Spritzkammer 61 bewegt werden.
Eine vertikale Säule 65 ist mittels ihres Laufwagens 66 in
einer Führung 67 begrenzt in Horizontalrichtung hin- und
herfahrbar, und zwar parallel zur Transportrichtung der Gegenstände 64. An der Säule 65 kann wiederum in Auf- und Abwärtsrichtung das Spritzaggregat 68 bewegt werden.

An der dem Spritzaggregat 68 gegenüberliegenden Seite der
Spritzkammer 61 ist eine Vorrichtung 69 zur Rückgewinnung
des als Overspray an den Gegenständen 64 vorbeitretenden Spritzmediums vorgesehen. Diese Vorrichtung 69 weist dabei eine Bauart auf, die teilweise der Vorrichtung 9 nach den Fig. 1 und 2
teilweise der Vorrichtung 29 nach den Fig. 3 und 4 entspricht.

An die Wand 70 der Spritzkammer 61 schließt sich auch hier
ein Saugkanal 71 an, der mit einem Saugzugventilator in Ver-

PATENTANWÄLTE   F.W. HEMMERICH · GERD MULLER · D. GROSSE · F. POLLMEIER

bindung steht. Die vordere  Niederschlagsfläche 72' wird
hier von einer im eine horizontale Achse drehantreibbaren,
kreisförmigen Scheibe 73' gebildet, während die hintere Niederschlagsfläche 72" aus einer stationären Wand 73" besteht.

Mit der Niederschlagsfläche 72' arbeitet dabei ein stationärer Abstreifer 78' zusammen, während der Niederschlagsfläche
72" bewegbare Abstreifer 78" zugeordnet sind, die über Antriebsvorrichtungen 74 bewegbar sind, die aus um Umlenkräder
75 laufenden Endlosketten 76 bestehen.

Die drehantreibbare Scheibe 73' ist ebenso wie die Scheibe
13' nach den Fig. 1 und 2 gleichmäßig über ihre ganze Fläche
verteilten Durchbrüchen 77' in Form größerer Löcher oder
Schlitze versehen, während die stationäre Wand 73" in gleicher
Weise wie die stationäre Wand 33' nach den Fig. 3 und 4
gleichmäßig über ihre ganze Fläche verteilt angeordneten
Durchbrüchen 77" in Form größerer Löcher oder Schlitze ausgestattet ist.

Das an den zu behandelnden Gegenständen 64 als Overspray vorbeifliegende Spritzmedium wird hauptsächlich von der Niederschlagsfläche 72' der drehbaren Scheibe 73' aufgefangen und hiervon
mit Hilfe des Abstreifers 78' entfernt sowie in die Auffangwanne 79 geleitet. Nur das unter der Wirkung des Saugluftstromes durch die Durchbrüche 77' hindurchtretende Overspray
gelangt dann auf die Niederschlagsfläche 72" der stationären
Wand 73" und wird von dort mittels der bewegten Abstreifer 78"
entfernt und in die Auffangwanne 79 gebracht.

Der drehangetriebenen Scheibe 73' ist die gleiche Lösungsmittel-Beneztungsvorrichtung zugeordnet wie beim Ausführungsbeispiel nach den Fig. 1 und 2, während der stationären Wand 73"
eine Lösungsmittel-Benetzungsvorrichtung zugeordnet werden
kann, wie sie aus Fig. 3 ersichtlich ist.

Die dargestellten und beschriebenen Ausführungsbeispiele machen deutlich, daß Vorrichtungen zur Rückgewinnung von Overspray trotz Erfüllung der gleichen Grundvoraussetzungen in vielen verschiedenen Ausführungsformen erstellt werden können. Wesentlich ist dabei lediglich, daß sie mindestens zwei jeweils mit einem Abstreifer zusammenarbeitende Niederschlagsflächen hat, die im Abstand hintereinander angeordnet sind, wobei wenigstens die vordere Niederschlagsfläche luftdurchlässig ausgebildet ist.

Bei den gezeigten Ausführungsbeispielen ist zwar jeweils auch die hintere Niederschlagsfläche luftdurchlässig ausgeführt. Sie kann jedoch auch so gestaltet sein, daß sie nicht luftdurchlässig ist, sondern lediglich als Ablenkfläche für den auf sie auftreffenden Luftstrom wirkt, bevor dieser anschließend in den Absaugkanal gelangt. Auch in diesem Falle werden nämlich die durch die vordere Niederschlagsfläche vom Luftstrom hindurchgerissenen Overspray-Partikel an der hinteren Niederschlagsfläche festgehalten und von diesen mittels der zugeordneten Abstreifer entfernt.

27. Oktober 1982          f.ni                    73 852


Fritz Schäfer Gesellschaft mit beschränkter Haftung,
Fritz-Schäfer-Straße 20, 5908 Neunkirchen


Patentansprüche:


1. Vorrichtung zur Spritzbehandlung, insbesondere zur Spritzlackierung, von Gegenständen mit einer sich quer zur Spritzrichtung erstreckenden Niederschlagsfläche für das an den
   Gegenständen vorbeitretende Spritzmedium, mindestens einem
   Abstreifer zum Entfernen des Niederschlages von der Niederschlagsfläche und einer unterhalb der Niederschlagsfläche
   angeordneten Auffangwanne, wobei in der Spritzkammer ein
   im wesentlichen mit der Spritzrichtung gleichgerichteter
   Luftstrom aufrechterhalten ist,
   d a d u r c h   g e k e n n z e i c h n e t ,
   daß wenigstens zwei jeweils mit einem Abstreifer (18', 18";
   38', 38"; 58', 58"; 78', 78") zusammenarbeitende Niederschlagsflächen (12', 12"; 32', 32"; 52', 52"; 72', 72") im
   Abstand hintereinander angeordnet sind und dabei wenigstens
   die vorderen Niederschlagsfläche (12'; 32', 52'; 72') - in
   an sich bekannter Weise - luftdurchlässig ausgebildet ist
   (17'; 37'; 57; 77').


2. Vorrichtung nach Anspruch 1,
   d a d u r c h   g e k e n n z e i c h n e t ,
   daß zwei baugleiche Niederschlagsflächen (12', 12"; Fig. 1)
   bzw. (32', 32"; Fig. 3) vorgesehen sind.


3. Vorrichtung nach Anspruch 1,
   d a d u r c h   g e k e n n z e i c h n e t ,
   daß zwei baulich unterschiedliche Niederschlagsfläche (72',
   72"; Fig. 7) vorgesehen sind.


                                                    - 2 -

4. Vorrichtung nach einem der Ansprüche 1 und 2,
   d a d u r c h   g e k e n n z e i c h n e t ,
   daß die Niederschlagsflächen (12', 12") aus um horizontale
   Achsen (14) drehantreibbaren Scheiben (13', 13") bestehen·
   (Fig. 1 und 2).

5. Vorrichtung nach Anspruch 4,
   d a d u r c h   g e k e n n z e i c h n e t ,
   daß die Scheiben (13', 13") achsgleich angeordnet sind.

6. Vorrichtung nach den Ansprüchen 4 und 5,
   d a d u r c h   g e k e n n z e i c h n e t ,
   daß die Scheiben (13', 13") auf einer gemeinsamen Welle
   (14) sitzen.

7. Vorrichtung nach einem der Ansprüche 4 und 5,
   d a d u r c h   g e k e n n z e i c h n e t ,
   daß die Scheiben (13', 13") gegenläufig antreibbar sind.

8. Vorrichtung nach einem der Ansprüche 1 und 2,
   d a d u r c h   g e k e n   n z e i c h n e t ,
   daß die beiden Niederschlagsflächen (32', 32") aus ortsfesten Wänden (33', 33") bestehen, an denen die Abstreifer
   (38', 38") in Vertikal- oder Horizontalrichtung entlangbewegbar sind (34', 34"; Fig. 3 und 4).

9. Vorrichtung nach einem der Ansprüche 1 und 2,
   d a d u r c h   g e k e n n z e i c h n e t ,
   daß die beiden Niederschlagsflächen (52', 52") von der
   Außenseite und der Innenseite eines über Umlenkrollen (54)
   geführten endlosen Bandes (53) gebildet sind, wobei sowohl
   der Außenseite als auch der Innenseite desselben ein stationärer Abstreifer (58', 58") zugeordnet ist (Fig. 5 und 6).

10. Vorrichtung nach einem der Ansprüche 1 und 3,
    d a d u r c h   g e k e n n z e i c h n e t ,
    daß die eine Niederschlagsfläche (72') als drehbare
    Scheibe (73') und die andere Niederschlagsfläche (72")
    als stationäre Wand (73") ausgeführt ist (Fig. 7 und 8).

11. Vorrichtung nach einem der Ansprüche 1 und 3,
    d a d u r c h   g e k e n n z e i c h n e t ,
    daß die eine Niederschlagsfläche als stationäre Wand
    ausgebildet ist und die andere Niederschlagsfläche aus
    einem über Umlenkrollen geführten endlosen Band besteht.

12. Vorrichtung nach einem der Ansprüche 1 bis 11,
    d a d u r c h   g e k e n n z e i c h n e t ,
    daß die Luftdurchlässe in den Niederschlagsflächen aus
    Durchbrüchen, z. B. Löchern oder Schlitzen, relativ großer
    Abmessung bestehen.

Fig. 1

Fig. 2

Fig. 3

Fig. 4

Fig. 5

Fig. 6

0081166

**Fig. 7**

**Fig. 8**

Europäisches
Patentamt

**EUROPÄISCHER RECHERCHENBERICHT**

| | **EINSCHLÄGIGE DOKUMENTE** | | EP 82110964.2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| P,A | EP - A1 - 0 045 729 (OLOF ENG-WALL)<br><br>* Fig. 2; Ansprüche 1,5 *<br><br>---- | 1-2,9, 12 | B 05 C 15/00<br>B 05 B 15/04<br><br><br><br><br>**RECHERCHIERTE SACHGEBIETE (Int. Cl. ³)**<br><br>B 05 C<br>B 05 B |

Der vorliegende Recherchenbericht wurde für alle Patentansprüche erstellt.

| Recherchenort<br>WIEN | Abschlußdatum der Recherche<br>03-02-1983 | Prüfer<br>KAHOVEC |
|---|---|---|